Europäisches Patentamt

(19) European Patent Office

Office européen des brevets

(11) Publication number: **0 085 501**

**A2**

(12) # EUROPEAN PATENT APPLICATION

(21) Application number: **83300240.5**

(22) Date of filing: **18.01.83**

(51) Int. Cl.³: **A 01 N 25/02**

(30) Priority: **19.01.82 GB 8201391**

(43) Date of publication of application:
**10.08.83 Bulletin 83/32**

(84) Designated Contracting States:
**BE CH DE FR IT LI NL**

(71) Applicant: **THE DOW CHEMICAL COMPANY**
**Dow Center 2030 Abbott Road Post Office Box 1967**
**Midland Michigan 48640(US)**

(72) Inventor: **Mulqueen, Patrick Joseph**
**16 Willow Road South Wootton**
**Kings Lynn Norfolk(GB)**

(72) Inventor: **Dutton, Robert**
**Home Farm North Wootton**
**Kings Lynn Norfolk(GB)**

(74) Representative: **Allard, Susan Joyce et al,**
**BOULT, WADE & TENNANT 27 Furnival street**
**London EC4A 1PQ(GB)**

(54) Improvements in pesticidal formulations.

㊼ A liquid solution formulation comprising a mixture of (a) an agricultural chemical which has been rendered soluble in an organic liquid by the formation of a derivative with a lipophilic strong, acid containing sulphur or phosphorus, together (b) with at least one other agricultural chemical and/or agricultural adjuvant which enhances the activity of the formulation.

EP 0 085 501 A2

IMPROVEMENTS IN PESTICIDAL FORMULATIONS

The present invention relates to liquid solution formulations comprising a mixture of an agricultural chemical with a second component, the agricultural chemical having been rendered soluble in organic solvents by the formation of a derivative with a lipophilic strong acid containing sulphur or phosphorus.

Tricyclohexyltin hydroxide (commonly referred to as cyhexatin) is an acaricide effective by contact against the motile stages of a wide range of phytophagus mites, such as Tetranychus urticae. It is generally essentially insoluble in water and most common organic solvents suitable for use in agrochemical formulations e.g., aromatic hydrocarbons such as xylene. For this reason, cyhexatin has been prepared in the form of particulate preparations, such as a wettable powder.

More recently, the ability to reduce the particle size in a wet-milling process has lead to the development of a suspension of cyhexatin in water which is used as an aqueous flowable formulation. It is, however, a complicated production process to balance the optimum activity with the desired lack of phytotoxicity of the cyhexatin to the crops, e.g., hops, citrus and deciduous fruits in formulations containing particular cyhexatin.

In addition, in many cases, organic soluble pesticides are incompatible, either chemically or physically, with cyhexatin or other organic liquid insoluble pesticides. In such cases, their mixture often renders either one or both of the pesticides inactive, and makes liquid solution formulations i.e., emulsifiable concentrates of an admixture impossible.

It is highly desirable to provide emulsifiable concentrates which comprise mixtures of two or more pesticides, at least one of which is a normally organic liquid-insoluble pesticide.

Accordingly, in one aspect the present invention provides a liquid solution formulation comprising a mixture of (a) an agricultural chemical which has been rendered soluble in an organic liquid by the formation of a derivative with a lipophilic strong acid containing sulphur or phosphorus, together (b) with at least one other agricultural chemical and/or agricultural adjuvant which enhances the activity of the formulation.

Surprisingly, it has been found that when a normally organic liquid-insoluble pesticide is prepared as a derivative of a lipophilic acid or a salt thereof, the resulting lipophilic anionic derivative is soluble in many organic liquids and can be formulated with other pesticides, including those pesticides which are normally incompatible with the organic liquid-insoluble pesticide. Moreover, in many cases, the liquid solution formulation containing a mixture of two or more pesticides exhibits a broader spectrum of activity and/or increased efficacy.

The liquid solution formulations of the present invention are typically emulsifiable concentrates containing an organic liquid and at least two pesticides wherein at least one of the said pesticides is the lipophilic anionic derivative which is normally insoluble in the organic liquid. By the term "emulsifiable concentrate", is meant solutions of the pesticide derivative derived fron an organo-insoluble pesticide and a second pesticide in an organic liquid. Where the second pesticide is normally liquid additional inert organic liquid may not be required.

Representative organic liquids which can be employed in preparing the emulsifiable concentrates of the present invention are the aromatic liquids such as xylene; propyl benzene fractions; or mixed naphthalene fractions; mineral oils;

substituted aromatic organic liquids such as dioctyl phthtalate; dialkyl amides of various fatty acids such as the dimethyl amide of caprylic acid; glycols and glycol derivatives such as the n-butyl ether, ethyl ether or methyl ether of diethylene glycol, the methyl ether of triethylene glycol, the methyl ether of dipropylene glycol, the n-butyl ether of ethylene glycol; the ethyl, methyl or phenyl ether of ethylene glycol; or the methyl ether of propylene or tripropylene glycol. Mixtures of two or more organic liquids are also often suitably employed in the preparation of the emulsifiable concentrate. The preferred organic liquids are xylene, and propyl benzene fractions, with xylene being most preferred.

Examples of lipophilic strong anionic salts which may be used in the present invention include sulphonates, particularly the aryl and aralkyl sulphonates; the sulphates particularly the alkyl and substituted alkyl sulphates; the phosphates; particularly the alkyl aryl or aralkyl phosphates; the ether sulphates; the olefin sulphonates; the ether phosphates; the phosphonates, particularly the alkyl, aryl or aralkyl phosphonates; the sulphosuccinates; and the corresponding acids of such salts.

Of the described lipophilic acid or salts thereof, those most advantageously employed in preparing the pesticidal derivatives are dependent on the organic liquid insoluble pesticide employed and the organic liquid in which the emulsifiable concentrate is to be prepared. In general, the solubility and stability of the derivative of the normally, organic liquid insoluble pesticide will vary with the increasing strength of the acid and lipophilicity of the acid employed. It will be understood that the choice of the lipophilic anionic will be determined by the properties required of the final formulation. Preferred acids are those containing sulphur or phosphorus and having a PKa of 3 or below at 25$^{\mathrm{O}}$C preferably below 2.5 at 25$^{\mathrm{O}}$C. In general, the preferred lipophilic anions are the sulphonates, particularly the aryl and aralkyl sulphonates, more particularly the aralkyl sulphonates. Most preferred lipophilic anions are the alkylbenzene sulphonates having from 6 to 18 carbon atoms in the alkyl group, the dodecyl and tridecylbenzene sulphonates being most preferred.

Cf the organic liquid-insoluble pesticides, tricyclohexyltin and triphenyltin compounds are of particular interest herein, with cyhexatin being of the most particular interest.

The organic liquid-soluble pesticides which can be formulated with the lipophilic anionic derivatives to form emulsifiable concentrates, include any pesticide which is soluble in the organic liquid employed in preparing the emulsifiable concentrate and which does not interact with the lipophilic anionic derivative to destroy the activity of the derivative and/or the normally soluble pesticide. Examples of such pesticides include the various insecticides soluble, to some extent, in the organic liquid. Examples of such insecticides include :

deltamethrin

cypermethrin

fenvalerate

permethrin, and other synthetic pyrethroids chlorpyrifos

chlorpyrifos-methyl

diflubenzuron and other acyl urea derivatives dimethoate

triazphos

methomyl

carbaryl

endosulfan

phospholan

mephospholan

profenophos

sulprofos

pirmiphos-methyl

methidathion

etrimfos

mecarbam

larvin

These can be admixed with a lipophilic anionic derivative of cyhexatin to form stable, emulsifiable concentrates without deleteriously affecting the activity of the cyhexatin (or fentin hydroxide) derivative or the normally soluble insecticide. In many cases, the aforementioned insecticides cannot be formulated directly with cyhexatin due to the chemical incompatibility of the cyhexatin, with the listed insecticide or its formulation. However, the insecticides can be admixed with the neutral salt of the cyhexatin to form an emulsifiable concentrate without reduction of the efficacy of either pesticidal component. Of the aforementioned insecticides, cypermetrin, chlorpyrifos, chlorpyrifos-methyl, endosulfan and mecarbam are particularly preferred.


Similarly, acaricides represented by :

propargite

dinobuton

brompropylate

3,6-bis(2-chlorophenyl)-1,2,4,5-tetrazine

benzoxamate

monocrotophos

tetrasul

formetanate

chloropropylate

dicofol

tetradifon

flubenzamine

chlordimeform

amitraz

have problems of physical and sometimes chemical incompatibility in admixture with cyhexatin.

Although most of these acaricides are not soluble in a solvent common to cyhexatin, they can be formulated as an emulsifiable concentrate with a lipophilic anionic derivative of cyhexatin to provide an emulsifiable concentrate. Of the listed acaricides, dicofol, tetradifon and 3,6-bis(2-chlorophenyl)-1,2,4,5-tetrazine are of particular interest.

In addition, it is also possible to form an emulsifiable concentrate of the cyhexatin derivative using various other organosoluble additives such as spreaders, stickers and insecticide synergists, e.g., piperonylbutoxide and 1-dodecylimidazole. The choice of such additives will depend, inter alia, upon the organic liquid insoluble pesticide employed and the organic liquid in which the emulsifiable concentrate is to be prepared.

In addition to the lipophilic, anionic derivatives of cyhexatin and fentin hydroxide, an emulsifiable concentrate can be prepared using other normally organic liquid-insoluble pesticides, the lipophilic anionic derivative of which is sufficiently soluble in one or more organic liquids to form an emulsifiable concentrate containing at least one other pesticide. For example, the lipophilic anionic derivative of the normally organic liquid-insoluble insecticides (commercially available salts) and acaricides such as:

cartap

chlorodimeform

formetanate

menazon

nicotine

pirimicarb

thiocyclam

can be prepared as an emulsifiable concentrate in combination with one or more other pesticides which are normally soluble in the organic liquid used in preparing the emulsifiable concentrate. For example, thiocyclam will react with chlorpyrifos and cypermethrin so that a formulation containing thiocyclam and either chlorpyrifos or cypermethrin cannot effectively be employed. Moreover, the commercially available oxalate salt of thiocyclam is not readily organic liquid-soluble and therefore cannot effectively be prepared as an emulsifiable concentrate with chlorpyrifos or cypermethrin. However, the dodecylbenzene sulphonic acid derivative of thiocyclam is organo liquid soluble and can be co-formulated with chlorpyrifos or cypermethrin or their combination to prepare an emulsifiable concentrate.

In addition, the lipophilic anionic derivatives of normally organic liquid-insoluble plant growth regulators such as :

chlormequat chloride

chlorphonium chloride

piproctanyl bromide

N,N,N-tributyl-3-(trifluormethyl) benzenemethanium chloride

can be prepared as emulsifiable concentrates in combination with one or more normally organic liquid soluble pesticides. For example, the dodecyclbenzene sulphonic acid derivative of N,N,N-tributyl-3-(trifluormethyl) benzenemethanium chloride is a viscous liquid which is essentially, completely miscible in many common liquids. This sulphonic acid derivative can now be formulated with another pesticide such as chlorpyrifos, chlorpyrifos-methyl and cypermethrin, to prepare an emulsifiable concentrate which when diluted in water can be applied to crops to achieve dual action, e.g., cotton growth control and insect control. As the chloride, such formulation; as an emulsifiable concentrate was not possible.

The lipophilic anionic derivative of various cationic herbicides such as difenzoquat, diquat and paraquat render the normally organic liquid insoluble herbicides organic liquid soluble. In addition, these organic liquid soluble materials can now be formulated as emulsifiable concentrates with one or more pesticides. For example, the sulphosuccinate derivative of difenzoquat produces an oily derivative which can be formulated with phenoxy ester herbicides such as 2,4-D-isooctyl ester in an emulsifiable concentrate. The resulting concentrate is easily dispersed in water and exhibits a broader spectrum of activity. Alternatively, the lipophilic anionic derivative of paraquat is an organic liquid soluble derivative which can be prepared as an emulsifiable concentrate in combination with triclopyr butoxy ethyl ester or 2-(4-((3-chloro-5-(trifluoromethyl)-2-pyridinyl)-oxy)phenoxy propionic acid methyl ester.

The lipophilic acid derivatives of various organic liquid insoluble fungicides such as :

carbendazim

dicloran

dimethirimol

dodemorph

dodine

ethirimol

guazatine are organic liquid soluble and can be formulated with other organic liquid soluble pesticides such as ditalimfos as an emulsifiable concentrate.

Other products which conventionally form complexes with a variety of materials such as triadimefon, prochloraz will form oil-soluble complexes with dodecylbenzene-sulphonic acid which are then co-formulated with ditalimfos as emulsifiable concentrates.

Similarly, products such as linuron or fenuron can be reacted with dodecylbenzenesulphonic acid to produce derivatives with higher oil-solubility than linuron or fenuron alone allowing for greater ease of co-formulation with other pesticides, e.g., chlorpropham.

Nitrification inhibitors, such as 3-methyl pyrazole can also be reacted to produce oil-soluble derivatives which again can be co-formulated with an insecticide for a combined fertilizer/insecticide treatment, e.g., in combination with chlorpyrifos.

The above list is not to be taken as limiting but is representative of the applicability of this technique of improved formulation capability of pesticide mixtures.

The lipophilic anionic derivatives of the present invention may advantageously be prepared directly in the form of emulsifiable concentrates. For example, the organic liquid insoluble insecticide is advantageously slurried in one or more organic liquids and the lipophilic acid or salt thereof added to the resulting slurry.

Although, in general, the emulsifiable concentrates are prepared as a dispersion of finely divided particles in the liquid, by properly selecting the organic liquid and emulsifiers employed, the emulsifiable concentrates can be utilized as micellar solutions (solublilzed formulations).

At any time subsequent to neutralization, the second component and the oil soluble derivative from the neutralization can be admixed to give the desired emulsifiable concentrate.

The amounts of the active components most advantageously employed are dependent on various factors including the specific derivative, other active component and organic liquid employed in preparing the emulsifiable concentrate and the end use application. In general, the active components (i.e., derivatives and other component) are employed in an amount sufficient such that the desired concentration of each active component are obtained upon subsequent dilution in water. In general, the emulsifiable concentrates will contain from 5 to 70, preferably from 20 to 40 weight percent of the active components in total.

In addition to the organic liquid and the cyhexatin or fentin hydroxide derivative, the emulsifiable concentrate will generally comprise at least one surfactant or emulsifier to ensure the ready dispersion of the concentrate upon its subsequent dilution in water.  The surfactants suitably employed herein are those surface active agents which are compatible with the derivative and the organic liquid employed in preparing the emulsifiable concentrate and in which permit the subsequent dispersion of the derivative as an emulsion in water. Emulsifiers which can be advantageously employed herein can be readily determined by those skilled in the art and include various nonionic, anionic, cationic or amphoteric emulsifiers, or a blend of two or more emulsifiers can be employed.  Examples of nonionic  emulsifiers useful in preparing the emulsifiable concentrates include the polyalkylene glycol ethers and condensation products of alkyl phenols, aliphatic alcohols, aliphatic amines or fatty acids with ethylene oxide, propylene oxide or mixtures of ethylene and propyleneoxides such as the ethoxylated alkyl phenols, e.g., nonyl phenoxypoly (ethylene oxy) ethanol, and the carboxylic esters solubilized with the polyol or polyoxy ethylene.  Cationic emulsifiers include quaternary ammonium compounds and fatty amines.  Preferred emulsifiers for emulsifiable concentrates are nonionics and organosoluble anionics or blends thereof such as Tensiofix B 7416 and B 7453, with the most preferred being alkoxylation derivatives of fatty amines, e.g. Ethomeen C-25.

The surfactant is employed in an amount sufficient to ensure that the concentrate can be dispersed in water to form an emulsion or suspension of the derivative, other active component(s) and organic liquid employed and the desired end use application. The emulsifiable concentrates will advantageously comprise from 1.0 to 50, preferably from 5 to 35, weight percent of an emulsifier, said weight percent being based on the total weight of the emulsifiable concentrate.

The emulsifiable concentrates of the present invention are suitable for subsequent dilution in an aqueous liquid and for application as required. Certain of the emulsifiable concentrates of the present invention can also be used as animal health care products in the treatment of animal and poultry ectoparasites especially where the second pesticide component has especially preferred ectoparasitic activity, e.g., cypermethrin, amitraz.

EXAMPLE 1

An emulsifiable concentrate of a cyhexatin derivative was prepared by slurrying cyhexatin (200g) in xylene (400g) at room temperature and adding dodecylbenzenesulphonic acid (176g) to form a stable derivative. Following this neutralization the mixture was treated with a surfactant (Ethomeen C-25) /100g/ and xylene added to volume (to 1 litre). The resultant solution concentrate contained 200g/litre cyhexatin and was dilutable in water producing satisfactory emulsions for application to corps.

B. Preparation of mixed formulation

An emulsifiable concentrate formulation containing 200g/litre cyhexatin and 200g/litre chlorpyrifos was prepared by adding to the neutral xylene solution of cyhexatin an amount equivalent to 200g/litre of chlorpyrifos. Addition of surfactant (Ethomeen C-25) and xylene balance provided a clear emulsifiable concentrate which on storage showed no degradation of either active pesticide, and in which the biological activity of both pesticidal components was maintained.

For comparison, a powder formulation containing 200g/Kg cyhexatin and 200g/Kg chlorpyrifos was prepared. After one month at 40°C, gross decomposition of both pesticides was observed.

EXAMPLE 2

An emulsifiable concentrate containing 200g/litre cyhexatin and 27g/litre cypermethrin was prepared according to Example 1. Cypermethrin was added after the neutralization. This product was a clear emulsifiable concentrate which on storage showed no degradation of either active pesticide.

For comparison, a mixture of cyhexatin and cypermethrin in solution shows degradation of both pesticides on storage.

EXAMPLE 3

Thiocyclam hydrogen oxalate (270g) was neutralised with sodium hydroxide, followed by treatment with a mole equivalant of dodecylbenzenesulphonic acid. Extraction of the oil produced after drying and evaporation a crystalline solid which was soluble in xylene. This was co-formulated with chlorpyrifos to produce a conventional emulsifiable concentrate. Thiocyclam hydrogen oxalate cannot conveniently be formulated as an emulsifiable concentrate in xylene.

EXAMPLE 4

N,N,N-tributyl-3-(trifluoromethyl) benzene methanamium chloride was treated in aqueous solution with a mole equivalant of sodium dodecylbenzene sulphonate. The oil which separated was extracted in dichloromethane. The dried extracts produced, after removal of solvent, a golden viscous oil. This was miscible in xylene and a 200g/litre formulation conveniently formulated by conventional techniques in admixture with 200g/litre chlorpyrifos. Normally, N,N,N-tributyl-3-(trifluoromethyl)benzene-methanamium chloride is insoluble in xylene and cannot be formulated as an emulsifiable concentrate.

EXAMPLE 5

Difenzoquatmethyl sulphate (360g) was reacted with one mole equivalent sodium di-isooctylsulphosuccinate in water. The oil which separated was extracted with dichloromethane. The dried extracts produced, after removal of solvent, a viscous oil. This was conveniently formulated in a mixture with 2,4-dichlorophenoxy-acetic acid iso-octyl ester to produce an emulsifiable concentrate by conventional techniques. Difenzoquat methyl sulphate is generally classed as insoluble in xylene.

EXAMPLE 6

Paraquat dichloride (257g) was reacted with one mole equivalent of sodium dodecyl benzene sulphonate in water. The tar which separated was extracted with dichloromethane. The dried extracts produced after evaporation, a dark tar which was soluble in xylene. This product was conveniently formulated as an emulsifiable concentrate in combination with triclopyr butoxyethyl ester. Normally paraquat

dichloride is insoluble in xylene.

EXAMPLE 7

Carbendazim (191g) was slurried in xylene and treated with one mole equivalent of dodecylbenzenesulphonic acid. Carbendazim dissolved and the resultant liquid concentrate was used to formulate an emulsifiable concentrate in combination with ditalimfos by conventional techniques.

Previous mixtures have had to be wettable powders or aqueous suspension concentrates.

EXAMPLE 8

Linuron (249g) was slurried in xylene and treated with one mole equivalent of dodecylbenzenesulphonic acid. Linuron dissolved completely and did not crystallize from the solution even when stored at $-5^{\circ}C$ for extended periods of time.

This xylene concentrate was used to conveniently produce an emulsifiable concentrate with chlorpropham without the need for highly polar co-solvents to keep linuron in solution. Similar results were obtained with fenuron in combination with dodecylbenzene sulphonic acid and the subsequently produced emulsifiable concentrate mixture with chlorpyridam.

CLAIMS

1. A liquid solution formulation comprising a mixture of (a) an agricultural chemical which has been rendered soluble in an organic liquid by the formation of a derivative with a lipophilic strong acid containing sulphur or phosphorus, together (b) with at least one other agricultural chemical and/or agricultural adjuvant which enhances the activity of the formulation.

2. A derivative as claimed in claim 1 wherein the lipophilic anion is an alkyl aryl sulphonate, an aryl sulphonate, a long chain optionally substituted alkyl sulphate, an alkyl- or aryl- phosphate, an ether sulphate or olefin sulphonate, an ether phosphate, an alkyl- or aryl phosphonate or an alkyl- or aryl -sulphosuccinate, or the corresponding acids of such lipophilic anions.

3. A formulation as claimed in claim 1 or claim 2 wherein ingredient (a) is a pesticide.

4. A formulation as claimed in claim 3 wherein the pesticide is a cyhexatin deravitive.

5. A formulation as claimed in claim 3 or claim 4 wherein the derivative with the lipophilic strong acid is an alkyl benzene sulphonic acid derivative.

6. A formulation as claimed in claim 5 wherein the alkyl benzene sulphonic acid derivative is a dodecylbenzene sulphonic acid derivative.

7. A formulation as claimed in claim 5 wherein the alkyl benzene sulphonic acid derivative is a tridecylbenzene sulphonic acid derivative.

8. A formulation as claimed in any one of the preceding claims wherein ingredient (b) is an insecticide or acaracide.

9. A formulation as claimed in any one of claims 1 to 7 wherein ingredient (b) is an appropriate synergist or biological performance enhancer.

10. A method for controlling plant infestations which comprises applying to the locus of the infestations a formulation as claimed in any one of claims 3 to 9.

11. A formulation as claimed in any one of claims 3 to 9 for use in the control of animal and poultry ectoparasites.

12. An emulsifiable concentrate which comprises a formulation as claimed in any one of claims 1 to 9 and an organic liquid.

13.  A concentrate as claimed in claim 12 wherein the organic liquid is xylene; a propyl benzene fraction; a mixed naphthalene fraction; dioctyl phthalate; kerosene; a polybutene; a mineral oil; a dimethyl amide of a fatty acid; an n-butyl ether of diethylene glycol, an ethyl ether of diethylene glycol; an ethyl ether of diethylene glycol; a methyl ether of diethylene glycol; a methyl ether of dipropylene glycol; an n-butyl ether of ethylene glycol; an ethyl, methyl or phenyl ether of ethylene glycol; a methyl ether of propylene or tripropylene glycol; or a mixture thereof.

14.  An aqueous emulsion comprising an emulsifiable concentrate as claimed in claim 12 or claim 13 wherein the diluent is water.

15.  A composition as claimed in any one of claims 12 to 14 which contains, in addition, a surfactant.

16.  A composition as claimed in claim 15 wherein the surfactant is an alkoxylation derivative of a fatty amine.